# EUROPÄISCHE PATENTSCHRIFT

(11) **EP 0 509 304 B1**
(45) Veröffentlichungstag und Bekanntmachung des Hinweises auf die Patenterteilung: **23.08.1995**
(21) Anmeldenummer: 92105450.8
(22) Anmeldetag: 30.03.1992
(51) Int. Cl.: C08F 271/02, C08L 101/00

(54) **Phosphorhaltige Pfropfpolymerisate**
Phosphorus-containing graft polymers
Polymères greffés contenant du phosphore

(30) Priorität: 09.04.1991 DE 4111391
(43) Veröffentlichungstag der Anmeldung: 21.10.1992
(73) Patentinhaber: BAYER AG, 51368 Leverkusen (DE)
(72) Erfinder: Lindner, Christian, Dr., W-5000 Köln 80 (DE); Wittmann, Dieter, Dr., W-5000 Köln 80 (DE)

(56) Entgegenhaltungen:
- EP-A- 0 305 816
- EP-A- 0 436 914
- US-A- 4 088 710

## Beschreibung

Die Erfindung betrifft teilchenförmige Pfropfpolymerisate die phosphorhaltige Monomere einpolymerisiert enthalten. Die neuen Pfropfpolymerisate eignen sich als halogenfreie Flammschutzadditive für Chemiewerkstoffe.

Für die Flammschutzausrüstung von Chemiewerkstoffen sind Phosphorverbindungen prinzipiell bekannt. Gesucht werden aber immer noch Phosphorverbindungen, die selbst hohe thermische Stabilität aufweisen, praktisch unflüchtig sind und auch bei Langzeitgebrauch von Chemiewerkstoffen keine Tendenz zur Migration (Ausschwitzung) zeigen.

Es wurde gefunden, daß spezielle teilchenförmige, vernetzte, Phosphor enthaltende Pfropfpolymerisate diese Anforderungen erfüllen können.

Es wurde weiter gefunden, daß man Phosphor enthaltende Pfropfpolymerisate durch radikalische Polymerisation aus speziellen Pfropfgrundlagen und speziellen Pfropfmonomeren erzeugen kann.

Gegenstand der Erfindung sind Pfropfpolymerisate aus
a) 10 - 90 Gew.-%, bevorzugt 30 - 80 Gew.-% eines (teil)vernetzten Copolymerisats von
   10 - 60 Gew.-%, bevorzugt 20 - 40 Gew.-% einer Verbindung der Formel (I) oder (II) 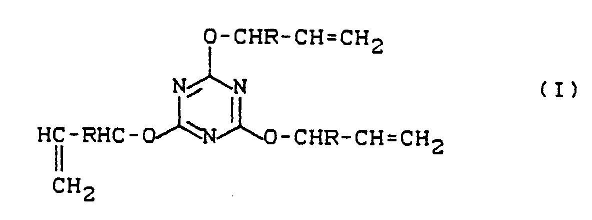 R = -H, -CH₃, -C₂H₅ 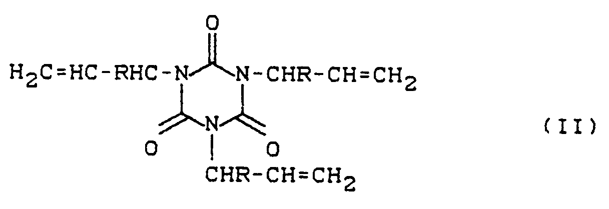 R = -H, -CH₃, -C₂H₅
   und 90 - 40 Gew.-%, bevorzugt 80 - 60 Gew.-% eines anderen Vinylmonomeren, bevorzugt eines Gemischs von zwei anderen Vinylmonomeren als Pfropfgrundlage und
b) 90 - 10 Gew.-%, bevorzugt 70 - 20 Gew.-% eines Polymerisats von Phosphonsäurederivaten der Formel (III) 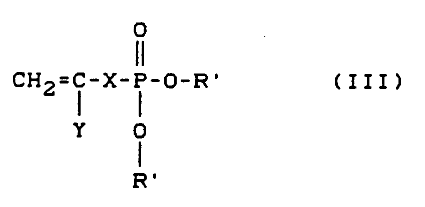
   - Y =: -H, -CH₃
   - X =: Einfachbindung; -CH₂-
   - R'=: Aryl, Alkyl
   als Pfropfauflage.

Andere Vinylmonomere sind beispielsweise Styrol, α-Methylstyrol, Acrylnitril, C₁-C₈-Alkylacrylat, C₁-C₈-Alkylmethacrylat und Vinylacetat.

Bevorzugte Pfropfgrundlagen a) werden erhalten aus Verbindungen der Formel (I) oder (II) und einer Mischung aus wenigstens zwei olefinisch ungesättigten Monomeren, beispielsweise Styrol und Acrylnitril oder Styrol und C₁-C₈-Alkylacrylat (bevorzugt Methylacrylat, Ethylacrylat oder Styrol) und C₁-C₈-Alkylmethacrylat (bevorzugt Methylmethacrylat). Besonders bevorzugt wird hierbei Styrol in höchstens einer solchen Menge eingesetzt, daß das Produkt a) nicht mehr als 50 Gew.-% einpolymerisiertes Styrol enthält.

Bevorzugte Verbindungen (I) und (II) sind Triallylcyanurat und Triallylisocyanurat.

Die Pfropfgrundlagen a) können durch übliche Emulsionspolymerisation in wäßrigem Medium kontinuierlich oder diskontinuierlich hergestellt werden. Als Emulgatoren benutzt man beispielsweise höhere aliphatische Fettsäuren, organische Sulfonsäuren oder Schwefelsäurehalbester (anionische Emulgatoren) oder polyethoxylierte Phenolderivate und aliphatische polyethoxylierte Polyetherblockcopolymere (nichtionische Emulgatoren).

Die Polymerisation kann durch die üblicherweise verwendeten Radikalinitiatoren ausgelöst werden, beispielsweise durch Peroxide, Persäuren, Hydroperoxide, Persulfate, Perphosphate sowie durch Redoxinitiatorsysteme. Besonders bevorzugt sind wasserlösliche anorganische Peroxosalze wie Kaliumperoxodisulfat und Kaliumperoxodiphosphat.

Die Copolymerisation zur Herstellung der Pfropfgrundlage a) wird bevorzugt zu möglichst hohen Umsätzen (mehr als 97 Gew.-%, bevorzugt 99 Gew.-% oder mehr) geführt. Dadurch wird erreicht, daß diese Polymerisate stark vernetzt sind und Gelgehalte über 90 Gew.-% aufweisen.

Die Pfropfgrundlagen a) sind im allgemeinen teilchenförmig. Die Größe der Teilchen (Teilchendurchmesser d₅₀) ist bevorzugt 0,05 bis 1 »m, bevorzugt 0,06 bis 0,3 »m (ermittelt durch Lichtstreuung).

Bevorzugte Pfropfmonomere sind Phosphonsäurederivate der Formel (III) mit
- X: = -CH₂-
und
- R': = C₁-C₈-Alkyl und C₆-C₁₂-Aryl, gegebenenfalls mit O- oder N-Gruppen substituiert
Bevorzugte Reste R' sind beispielsweise Phenyl, Naphthyl, Methoxyphenyl, Ethoxyphenyl, Acetamidophenyl, Methyl-, Ethyl-, Propyl-, Butyl- oder Hexylphenyl.

Bevorzugte Pfropfauflagen b) werden durch Copolymerisation von Phosphonsäurederivaten der Formel (III) und Maleinsäurederivaten erhalten, wie Maleinsäureanhydrid, Maleinsäureimide oder Maleinsäureester, insbesondere Maleinsäureanhydrid.

Zusätzlich können weitere Vinylmonomere in die Pfropfauflage b) einpolymerisiert werden, vorzugsweise in Mengen bis zu 20 Gew.-%, bezogen auf 100 Teile b), z.B. Styrole, α-Methylstyrol, Acrylnitril, Methacrylnitril, Vinylacetat; Vinylpropionat, Vinylether, C₁-C₈-Alkyl-Acrylate und -Methacrylate, Diene.

Die erfindungsgemäßen Pfropfpolymerisate können durch mehrstufige radikalische Polymerisation erhalten werden. In einer ersten Stufe wird durch Emulsionspolymerisation in wässrigem Medium die Pfropfgrundlage a) erzeugt. Die erforderlichen Bedingungen und Hilfsstoffe sind oben beschrieben. Die so erhaltenen Latices dienen als Pfropfgrundlage.

Die Pfropfpolymerisation der die Pfropfhülle b) bildenden Monomeren kann ebenfalls in wässriger Emulsion durchgeführt werden, vorzugsweise unter Zuhilfenahme von Emulgatoren und Initiatoren; die Pfropfpolymerisate können danach z.B. durch Koagulation und Filtration isoliert werden (Weg 1). Man kann auch die Pfropfgrundlage a) aus ihrer wässrigen Emulsion und Koagulation abtrennen, waschen und zu einem Pulver aufarbeiten; durch Dispergieren dieses Pulvers in eine organische Flüssigkeit wie Toluol, Ethylbenzol, Xylol, Aceton, Methylethylketon werden organische Dispersionen erhalten, in denen dann die die Pfropfhüllen b) bildenden Monomere radikalisch polymerisiert werden; die Pfropfpolymerisate können z.B. durch Filtration oder Ausdampfung abgetrennt werden. (Weg 2). Diese Methode ist bevorzugt.

Die erfindungsgemäßen Pfropfpolymerisate stellen farblose feinteilige Pulver dar, die aufgrund des hohen Vernetzungsgrades in organischen Lösungsmitteln weitestgehend unlöslich sind.

Die erfindungsgemäßen Pfropfpolymerisate lassen sich mit bekannten thermoplastischen Kunststoffen mischen, z.B. in Brabender-Mischern, Schneckenmaschinen oder Knetern; die Pfropfpolymerisate werden so in einer Thermoplastschmelze hochdispers verteilt und wurden als Flammschutzmittel eingesetzt.

Ein weiterer Gegenstand der Erfindung ist somit die Verwendung der erfindungsgemäßen Pfropfpolymerisate als Flammschutzmittel in thermoplastischen Chemiewerkstoffen, insbesondere Thermoplasten. Als Thermoplaste sind zu nennen Styrol-Acrylnitril-Butadien-Terpolymerisate (ABS), Polymethylmethacrylat, Polystyrol, Polyvinylchlorid, Polypropylen, Ethylenpolymerisate, aromatische Polycarbonate, Polyester wie Polyalkylenterephthalat, Polyamide wie Polyamid-6 oder -6,6. Bevorzugte Thermoplaste sind Polycarbonate wie z.B. Bisphenol A-Polycarbonat und ABS sowie deren Mischungen.

In solchen Formmassen werden die erfindungsgemäßen Pfropfpolymerisate, vorzugsweise in Mengen von 1 - 20 Gew.-%, eingesetzt. Die so ausgerüsteten Chemiewerkstoffe benötigen keine oder weniger halogenhaltige Flammschutzmittel, weisen hohe mechanische Festigkeiten - ohne den üblicherweise auftretenden Weichmachereffekt - auf; bei Verarbeitung und Gebrauch treten die Vorteile einer Migrationsbeständigkeit der Pfropfpolymerisate auf. Zusätzlich sind die Formmassen sehr stabil gegen Licht- und Wärmeeinfluß.

### Beispiele

### 1) Herstellung der Pfropfgrundlage

In einem Reaktor werden vorgelegt: 4.000 Gew.-Teile Wasser und 10 Gew.-Teile C₁₄-C₁₆-Alkylsulfonsäure-Na-Salz. Bei einer Reaktionstemperatur von 70°C und nach Initiierung mit einer Lösung aus 10 Gew.-Teile Kaliumperoxidisulfat in 200 Gew.-Teile Wasser werden folgende Lösungen bei 70°C (innerhalb von 5 Stunden in den Reaktor eindosiert:

| | | |
|---|---|---|
| Lösung 1: | N-Butylacrylat | 1.700 Gew.-Teile |
| | Styrol | 300 Gew.-Teile |
| | Triallylcyanurat | 1.000 Gew.-Teile |
| Lösung 2: | Wasser | 2.000 Gew.-Teile |
| | C₁₄-C₁₆-Alkylsulfonsäure-Na-Salz | 50 Gew.-Teile |

Anschließend wird 4 Stunden bei 70°C auspolymerisiert. Es wird eine Emulsion mit einem Feststoffgehalt von 32 Gew.-% erhalten; der mittlere Teilchendurchmesser (d₅₀) beträgt 0,15 »m.

Die Emulsion wird mittels Bittersalz (MgSO₄ x H₂O) koaguliert. Das isolierte Polymerisat wird gewaschen und zu einem Pulver getrocknet. Das Polymerisat ist hochvernetzt und besitzt einen Gelgehalt von 97 Gew.-% (in DMF).

### 2) Herstellung der Pfropfpolymerisate

2.1 In eine Mischung aus 500 Gew.-Teilen Ethylbenzol und 700 Gew.-Teilen Vinylphosphonsäuredimethylester werden 400 Gew.-Teile feinteiliges Pulver 1) unter gutem Rühren eindispergiert. Anschließend gibt man 50 Gew.-Teile Maleinsäureanhydrid hinzu. Bei 90°C initiiert man die Polymerisation durch Zugabe von 4 Gew.-Teilen tert.-Butylhydroperoxid. Nach 6 Stunden Reaktionszeit bei 90°C mischt man den Ansatz mit 3.000 Gew.-Teilen Ethanol und isoliert das Pfropfpolymerisat durch Filtration. Das isolierte Polymerisat fällt als Pulver an. Es enthält 1,8 Gew.-% Phosphor.
2.2 Ansatz 2.1 wird wiederholt.
   Anstatt des Vinylphosphonsäuredimethylesters werden 700 Gew.-Teile Allylphosphonsäurediethylester eingesetzt. Der Phosphorgehalt des isolierten Polymerisates beträgt 3 Gew.-%.
2.3 Vergleichsversuch
   Versuch 2.2 wird wiederholt, indem man in Abwesenheit von 1. (Pfropfgrundlage) die Polymerisation und Aufarbeitung durchzuführen versucht. Unter den Bedingungen der Polymerisation von 2.2 ist keine Copolymerisatbildung festzustellen.
2.4 Das Polymerisat 2.2 wird in einer Soxleth-Extraktionsapparatur mit Toluol bei Raumtemperatur extrahiert (24 Stunden). Das so behandelte unlösliche Polymerisat besitzt einen Phosphorgehalt von 3,06 Gew.-%, d.h. es handelt sich praktisch ausschließlich um ein Pfropfpolymerisat des Phosphormonomerpolymerisates auf die Pfropfgrundlage.

### 3. Thermoplastische Formmassen Eingesetzte Komponenten:

3.1 Homopolycarbonat auf Basis von Bisphenol A mit einer relativen Lösungsviskosität von 1,32, gemessen in CH₂Cl₂ bei 25°C, hergestellt unter Verwendung von Phenol als Kettenabbrecher.
3.2 Styrol-Acrylnitril-Copolymerisat mit einem Styrol-Acrylnitril-Gew.-Verhältnis von 72 : 28 und einer Grenzviskosität von [η] = 0,55 dl/g (gemessen in DMF bei 20°C).
3.3 Triphenylphosphat
3.4 Tetrafluorethylenpolymerisat (®Teflon 30 N (DuPont))
3.5 Pfropfpolymerisat von 50 Gew.-% Styrol/Acrylnitril-Gemisch (Gew.-Verhältnis 72 : 28) auf 50 Gew.-% teilchenförmiges Polybutadien eines mittleren Teilchendurchmessers d₅₀ von 0,4 »m, erhalten durch Emulsions-Polymerisation.

Die Komponenten werden auf einem 3 l Innenkneter bei 200 bis 220°C gemischt und Formkörper auf einer Spritzgußmaschine bei 260°C hergestellt.

Das Brandverhalten der Proben wurde nach UL-Subj. 94 V in einer Prüfkörperdicke von 3,2 mm gemessen. (Zur genauen Durchführung s. EP 258 728, S.8).

Zur Ermittlung der Fließnahtfestigkeit wurde die Schlagzähigkeit nach DIN 53 452 (Charpy-Methode) an der Bindenaht von beiseitig angespritzen Prüfkörpern der Dimension 170 x 10 x 4 mm herangezogen.

**Tabelle 1**

| Formmassenzusammensetzung (Gew.-Teile) | | |
|---|---|---|
| | Formmassen | |
| Komponente | I | II |
| 3.1 | 86 | 86 |
| 3.2 | 7 | 7 |
| 3.3 | 2,5 | 2,5 |
| 3.4 | 0,3 | 0,3 |
| 3.5 | 7 | 7 |
| 2.2 | - | 4 |
| I = Vergleich II = erfindungsgemäß | | |

**Tabelle 2**

| Eigenschaften der Formmassen | | |
|---|---|---|
| | I | II |
| Brandverhalten UL 94 V | VO Einzelwerte: 10/-/-/- | VO Einzelwerte 10/-/-/- |
| Fließnahtfestigkeit aₙF bei Raumtemperatur | 8,2 | 12,4 |

## Patentansprüche

1. Pfropfpolymerisate aus
a) 10 - 90 Gew.-% eines (teil)vernetzten Copolymerisats von 10 - 60 Gew.-% einer Verbindung der Formel (I) oder (II) 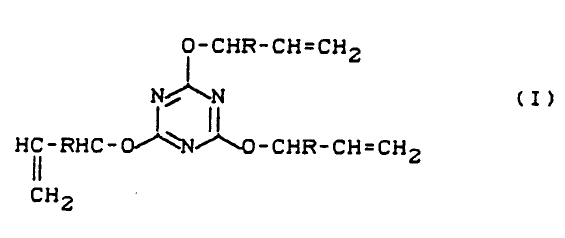 R = -H, -CH₃, -C₂H₅ 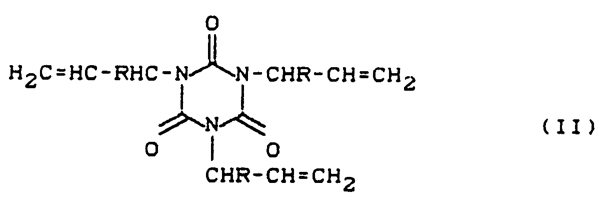 R = -H, -CH₃, -C₂H₅
und
90 - 40 Gew.-% eines anderen Vinylmonomeren oder eines Gemischs anderer Vinylmonomerer als Pfropfgrundlage und
b) 90 - 10 Gew.-% eines Polymerisats von Phosphonsäurederivaten der Formel (III) 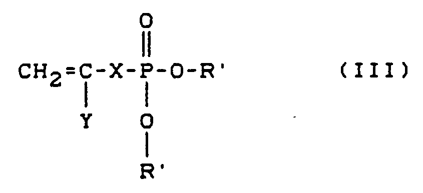
Y = -H, -CH₃
X = Einfachbindung; -CH₂-
R' = Aryl, Alkyl
als Pfropfauflage.

2. Pfropfpolymerisate nach Anspruch 1, worin die Pfropfauflage ein Copolymerisat von Monomeren der Formel (III) gemäß Anspruch 1 und Maleinsäureanhydrid, Maleinsäureimid oder Maleinsäureester darstellt.

3. Verwendung der Pfropfcopolymerisate gemäß Anspruch 1 als Flammschutzmittel für Chemiewerkstoffe.

## Claims

1. Graft polymers prepared from
a) 10 to 90 wt.% of a (partially) crosslinked copolymer of 10 to 60 wt.% of a compound of the formula (I) or (II) 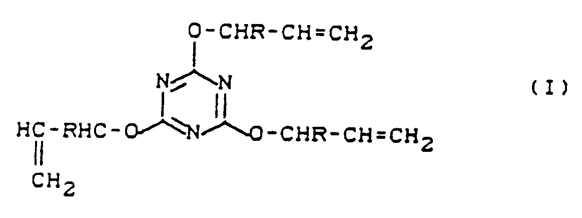 R = -H, -CH₃, -C₂H₅ 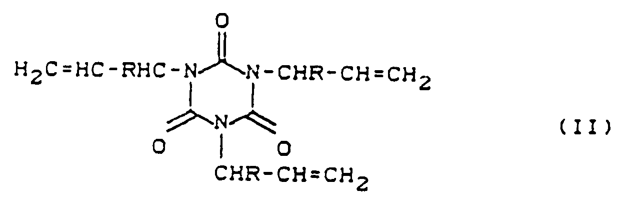 R = -H, -CH₃, -C₂H₅
and
90 to 40 wt.% of another vinyl monomer or a mixture of other vinyl monomers as the grafting backbone and
b) 90 to 10 wt.% of a polymer of phosphonic acid derivatives of the formula (III) 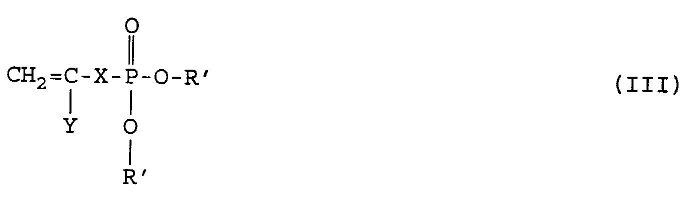 Y = -H, -CH₃
X = single bond; -CH₂-
R' = aryl, alkyl
as the graft.

2. Graft polymers according to claim 1 in which the graft is a copolymer of monomers of the formula (III) according to claim 1 and maleic anhydride, maleimide or maleic acid esters.

3. Use of the graft copolymers according to claim 1 as flame retardants for synthetic resins.

## Revendications

1. Polymères greffés de
a) 10 à 90% en poids d'un copolymère (partiellement) réticulé de 10 à 60% en poids d'un compose' de formule (I) ou (II) 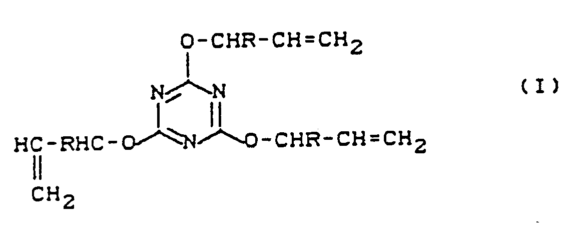 R = -H, -CH₃, -C₂H₅ 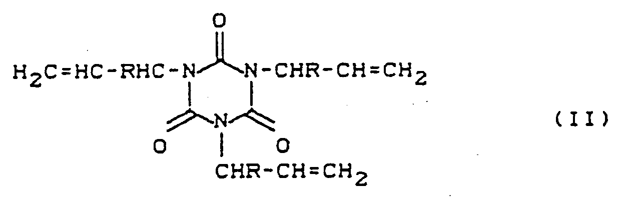 R = -H, -CH₃, -C₂H₅
et 90 à 40% en poids d'un autre monomère vinylique ou d'un mélange d'autres monomères vinyliques, servant de support de greffage et
b) 90 à 10% en poids d'un polymère de dérivés de l'acide phosphonique de formule (III) 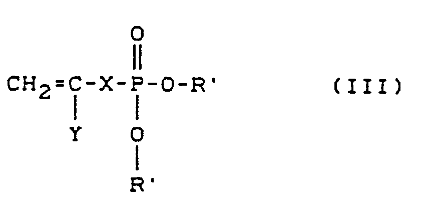 dans laquelle
Y=-H, -CH₃
X = liaison simple; -CH₂-
R' = aryle, alkyle,
appliqué par greffage.

2. Polymères greffés selon revendication 1, dans lesquels le support de greffage est un copolymère de monomères de formule (III) selon revendication 1 et de l'anhydride maléique, d'un maléimide ou d'un ester maléique.

3. Utilisation des copolymères greffés selon revendication 1 en tant qu'agents ignifugeants pour des matériaux chimiques.
